Europäisches Patentamt

(19) European Patent Office

Office européen des brevets

(11) Publication number: **0 038 798**
**B1**

(12) **EUROPEAN PATENT SPECIFICATION**

(45) Date of publication of patent specification: **12.09.84**

(51) Int. Cl.³: **B 29 C 17/02**

(21) Application number: **80900985.5**

(22) Date of filing: **06.06.80**

(86) International application number:
**PCT/GB80/00099**

(87) International publication number:
**WO 80/02671 11.12.80 Gazette 80/28**

(54) **POLYMER PROCESSING.**

(30) Priority: **06.06.79 GB 7919737**
**30.11.79 GB 7941427**

(43) Date of publication of application:
**04.11.81 Bulletin 81/44**

(45) Publication of the grant of the patent:
**12.09.84 Bulletin 84/37**

(84) Designated Contracting States:
**AT CH DE FR LI LU NL SE**

(56) References cited:
**GB-A- 953 734**
**NL-A-6 612 434**
**US-A-2 291 670**
**US-A-3 275 730**
**US-A-4 021 521**

(73) Proprietor: **NATIONAL RESEARCH
DEVELOPMENT CORPORATION
101 Newington Causeway
London SE1 6BU (GB)**

(72) Inventor: **WARD, Ian MacMillan
2 Creskeld Drive
Bramhope Leeds (GB)**
Inventor: **COATES, Philip David
3 Bentcliffe Avenue
Moortown Leeds 17 (GB)**
Inventor: **GIBSON, Arthur Geoffrey
35 Woolton Street
Liverpool, L25 7TG (GB)**

(74) Representative: **Colmer, Stephen Gary
Patent Department National Research
Development Corporation 101 Newington
Causeway
London SE1 6BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the deformation of thermoplastic polymers; more particularly, this invention relates to the solid phase deformation and concomitant molecular orientation of orientable, thermoplastic polymers.

GB—A—1311885 discloses a process for reducing the cross-sectional area of an article of an orientable, thermoplastic polymeric material by drawing the article, at a temperature below its melting point, through a well-lubricated die of smaller cross-sectional area than that of the article, which process comprises forming an integral, preferentially oriented nose at one end of the article by a solid phase deformation process, such that the tensile strength of the nose exceeds the draw tension to be applied to the article, gripping the nose and drawing the article through the die so as to induce a substantial degree of molecular orientation throughout the drawn article.

This patent specification further discloses that the process is preferably performed by utilising the technique of hydrostatic extrusion; indeed, every example of the invention does use this technique. However, and as the specification rightly points out, at the date of that specification simple hydrostatic extrusion was limited by a deformation ratio "boundary" above which further increase in the ratio of the cross-sectional area of the polymer billet to that of the extruder die orifice had no useful effect; relaxation effects resulted in an extrudate exhibiting die swell limiting the actual deformation ratio and orientation. These "boundaries" are given as low as 2.1:1 for polyvinyl chloride to 5.8:1 for glass fibre-filled polypropylene. The specification discloses overcoming this disadvantage by applying to the issuing extrudate a deforming draw tension, the complete process often being referred to as draw assisted extrusion.

GB—A—1480479 discloses a process for the production of an oriented polymer material which comprises preparing a polymeric workpiece by cooling a semi-crystalline polymer having a natural draw ratio greater than 6 from the melt at a rate from 0.1 to 10°C per minute thereby obtaining the workpiece with substantially uniform morphology in cross-section; and deforming the workpiece below the melting point of the polymer by application of pressure.

This patent specification further discloses that by starting with a polymer of selected weight and number average molecular weights and thermal history it is possible to increase the deformation ratio "boundaries" to much higher levels. Moreover, at deformation ratios greater than about 8:1, and contrary to the teaching of GB—A—1311885, it is disclosed that die swell with lowered actual deformation is not encountered and thus, as is shown in Examples 2 and 3, the application to the issuing extrudate of a deforming draw tension is unnecessary.

According to the present invention, there is provided a process for the solid phase deformation and concomitant molecular orientation of a workpiece of an orientable thermoplastic polymer, which process comprises: providing the workpiece at the entry side of a die and applying to the workpiece from the exit side of the die a draw tension insufficient to cause tensile failure of the workpiece and further characterised in that the workpiece is initially of the essentially unoriented polymer but is drawn through the die so that its plastic strain is progressively increased during start-up of the process.

The term "workpiece" as used herein includes bars, strips, rods, multifilaments, tubes and other cross-sections of solid or hollow stock. The term includes both billets and other forms of stock of greater length; indeed, continuous stock, which may be formed as the process is performed, may be utilised: examples include a polymer sheathed continuous core such as a metal wire, or continuous polymer rod, film or filaments.

The orientable thermoplastic polymer is desirably a semi-crystalline polymer, especially one which exhibits sufficient strain hardening and strain rate dependence of the flow stress to stabilise the neck formed under the desired drawing conditions. Preferred such polymers are unsubstituted or fluoro-substituted vinyl polymers and polyacetals, suitably a linear homo- or copolymer of ethylene or propylene with at least one comonomer, a vinylidene fluoride polymer or a homo- or co-polyoxymethylene.

Where it is intended to utilise the die drawing process of this invention to produce a product with enhanced Young's modulus; resistance to creep; resistance to gas transport; enhanced deadfold; or enhanced axial thermal conductivity then a workpiece of a linear homo- or copolymer of ethylene should desirably comprise a polymer having a weight average molecular weight ($\overline{M}_w$) less than 1,000,000, suitably from 50,000 to 500,000, preferably from 70,000 to 400,000; one of a linear homo- or copolymer of propylene should desirably comprise a polymer having a $\overline{M}_w$ from 150,000 to 800,000, preferably from 250,000 to 500,000.

However, the die drawing process of this invention may also be performed, to provide a more advantageous forming process but not the enhanced properties listed above, on a workpiece of an essentially unoriented but orientable, amorphous polymer or an essentially unoriented but orientable, semi-crystalline ultra high molecular weight polymer (for example, a linear homopolymer of ethylene having a $\overline{M}_w$ about 3,000,000). It may likewise be utilised, but to a lower deformation ratio, in respect of those polymers which would otherwise give the enhanced properties listed above.

The thermoplastic polymer workpieces used in the process of this invention may be filled. Examples of useful fibrous fillers include glass, asbestos, metal, carbon and ceramic whiskers, such as those formed from silicon carbide. Examples of useful laminar fillers include mica, talc and graphite flakes. Chalk and fly ash may also be included. The amount of filler which may advantageously be included depends on the nature of the filler, but up to 50% by weight, preferably less than 30%, especially less than 20%, may be incorporated.

The term "essentially unoriented" as used herein means that the workpiece has incurred no orientation other than that minor amount which might be induced during formation of the workpiece, for example during billet moulding or melt extrusion, or during any subsequent shaping thereof, for example by machining, prior to the performance of the die drawing process of this invention.

Where it is not possible to use the polymer as received as a workpiece, the workpiece may be formed either in the batch or continuously. In either case, where the cross-sectional area of the workpiece is substantially greater than that, for example, of a textile filament care must be taken to ensure that the workpiece cools sufficiently slowly to prevent voids and stress cracking from occurring. At low cross-sectional area, surface cooling effects outweight bulk conduction effects and the formation of voids and cracks is not found to pose any problem. Indeed, it is envisaged that the process of the invention applied to a workpiece, particularly a continuous workpiece, of low cross-sectional area, such as a filament or a film, will provide a practicable alternative to melt spinning or melt extrusion techniques for producing such material with enhanced Young's modulus.

In the case of a workpiece formed in the batch, for example a polymer billet, the following general methods have been found to be suitable. The polymer may be melted in a screw extruder; extruded or injected into a billet mould at a temperature about 30°C above its melting point and cooled under elevated pressure for 5 hours, or it may be melted in an extruder; extruded or injected into a cold billet mould; transferred to an oven for 4 hours under ambient pressure at a temperature below its melting point but above its crystallisation temperature; and thereafter allowed to cool in the oven after the heating has been switched off. The polymer may also be injection moulded into an air or water cooled billet mould. Progressive immersion in the cooling fluid is preferred, thereby ensuring that solidification of the polymer takes place from the bottom of the mould thereby preventing the formation of internal voids due to shrinkage. Where the workpiece is to be hollow it may be formed in the batch by including a mandrel of appropriate cross-section, usually coaxially, in the mould. Alternatively stock of circular solid or hollow cross-section may be produced continuously using one of several processes known to those skilled in the art.

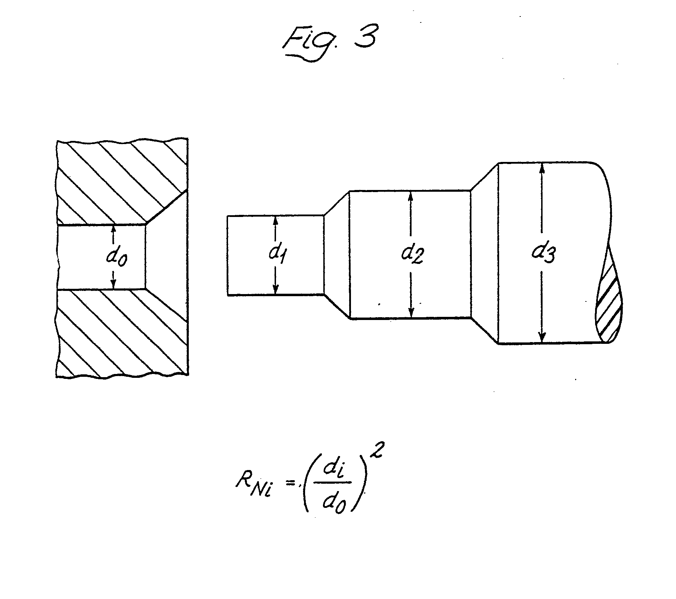

In accordance with the die drawing process of this invention the plastic strain of the workpiece is progressively increased during start-up of the process. This can be effected, in accordance with one embodiment of the invention, by utilising a workpiece wherein that end (herein termed the "nose") of the workpiece to which the draw tension is applied is of progressively reduced (either continuously or in stages) cross section. (Hereinafter particular reference is made for convenience to stock of circular solid or hollow cross-section. The die drawing process of this invention is not, however, limited to such cross-sections). The first alternative may be effected either by fabricating the workpiece with a conical nose, for example, by machining the workpiece to form a conical nose, or moulding the billet with a conical nose. The semi-angle of the nose should be less than that of the die through which the workpiece is to be drawn. The second alternative may be effected by fabricating, for example by machining the workpiece so that it has at least one, and preferably a plurality, for example from 2 to 4, of stages of progressively reduced cross-section, which together form a nose as shown in Figure 3 of the accompanying drawing.

In accordance with another embodiment of the invention the plastic strain of the workpiece can be progressively increased by providing at the entry side of the die a workpiece of essentially uniform cross section and, during start-up of the process, progressively reducing the aperture of the die orifice.

Both such embodiments may be effected simultaneously.

In both such embodiments, the nose is advanced to protrude through the die lips and is secured to tensioning means applied from the exit side of the die. A suitable arrangement includes a hauloff comprising a pair of serrated jaws in which the nose is gripped; a high tensile cable one end of which cable is attached to the jaws, the other to a winch or a loading station to which a turning moment or mass may be applied thereby applying a draw tension to the nose. The hauloff may also comprise, instead of a cable, any tension transmitting means used in the metal drawing art including a chain, a rack and pinion mechanism, a screw mechanism and a hydraulically operated draw mechanism. The hauloff may further comprise a pair of continuous contra-rotating friction belts, generally known as a "caterpillar" ("Caterpillar" is a Registered Trade Mark).

The drawn tension is sufficient to draw the workpiece through the die but insufficient to cause tensile failure of the article; that is, the draw tension is such that the true stress at any point of the product does not exceed its fracture stress at that point. A suitable maximum value of draw tension may readily be determined by routine experiment. In the case of strain hardening polymers, as the drawing progresses the flow stress of the strained portions of the workpiece increases. This will permit a greater draw tension to be applied (giving an increased plastic strain). This enables greater cross-sections of workpiece, or smaller apertures of die, or both, to be utilised also giving a further increase in plastic strain. These increases further strengthen the strained polymer so that the strain can be progressively increased during start-up until a product having desired final properties (for example, Young's modulus or cross-sectional area) is attained whereafter steady state processing conditions obtain.

After a grippable length of the workpiece has been drawn through the die the unoriented part of its nose may be removed and the oriented grippable length re-gripped thereby enabling a higher load to be applied.

For a particular polymer, a steady state process is obtained for a given set of temperature, draw speed and deformation ratio. "Deformation ratio" as used herein is the ratio of the initial cross-sectional area of the workpiece to the final cross-sectional area of the product. These parameters vary implicitly, but it has been found possible, for a particular polymer, to set the die temperature (which will be only a nominal temperature for the polymer since the process is not an isothermal one) and the workpiece shape and vary, by experiment, the draw speed to obtain the desired deformation ratio.

For linear homo- and copolymers of ethylene the die temperature is desirably set within 60°C below the melting point of the polymer. More particularly, for such polymers of $\bar{M}_w$ from 50,000 to 150,000, the die temperature is preferably from 70°C to 100°C; and for such polymers of $\bar{M}_w$ above 300,000 from 70°C to 120°C. For linear homo- and copolymers of polypropylene of weight average molecular weight from 150,000 to 800,000 the die temperature may be set from 20°—170°C, preferably 90°—130°C. A die temperature of 80°—170°C, preferably 150°—170°C is suitable for homo- or copolyoxymethylene and of 80°C to 165°C is suitable for vinylidene fluoride polymers. The polymer temperature may be further controlled by utilising a die with a temperature controlled chamber which extends downstream.

It is feasible to use draw speeds greater than 1 cm min$^{-1}$ in the die drawing process of this invention; indeed, speeds of 50 cm min$^{-1}$ or more are preferred.

Where hollow stock is being die drawn by the process of this invention it is essential to provide an appropriately dimensioned mandrel on the entry side of the die and protruding between the die lips to prevent collapse. In a continuous process this mandrel can suitably be of the "floating plug" type. In a batch process a fixed mandrel may be used.

A batch process may be converted to a continuous one by putting the upstream end of the deforming workpiece and the downstream end of stock of the same cross-section both in contact with a hot, stainless steel plate; removing the plate and welding the two polymer surfaces. Preferably such a weld should be at an angle of 45° or less to the axis of the stock.

Utilising the die drawing process of this invention on polymers which show adequate strain hardening and strain rate dependence of the flow stress, it is possible to obtain deformation ratios of at least 10, preferably 20 or even more.

The invention will now be more particularly described, by way of example, with reference to the accompanying drawings in which:

Figure 1 represents an axial section of a coextrusion line embodying a process in accordance with the invention; and

Figure 2 represents an axial section of an automated continuous extrusion line embodying a process in accordance with the invention.

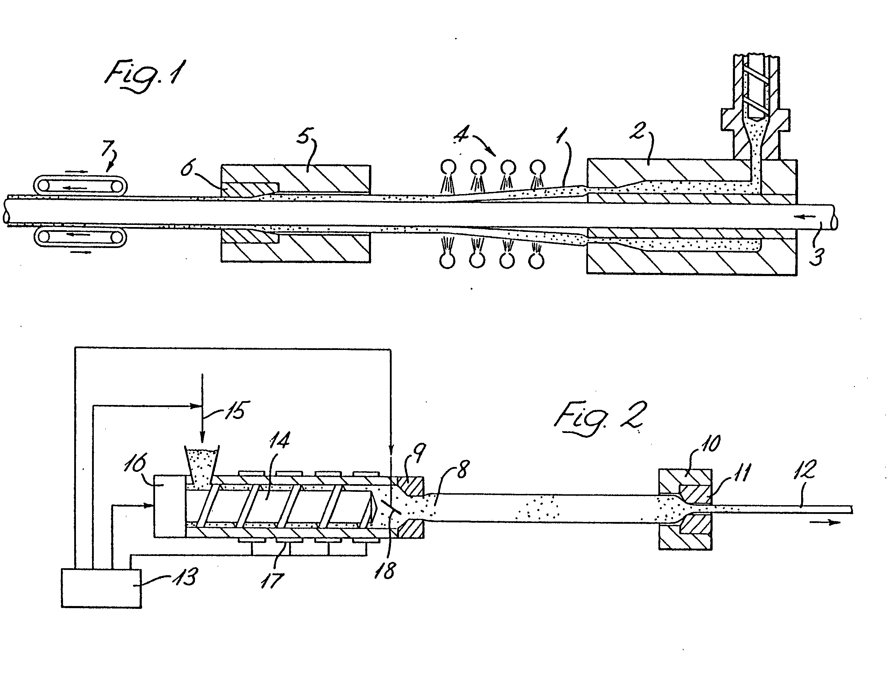

In Figure 1, a polymer coating 1 is supplied as melt flow from an extruder fitted with a crosshead annular die 2 through the centre of which the member to be coated 3 (such as cable, wire, rod or tube) is allowed to pass. The melt then passes through a cooling zone 4 where it is solidified. At the end of this zone the solidified coating 1 is essentially isotropic and is not in intimate contact with the surface of the member to be coated 3. Both member and isotropic coating then pass into a drawing block 5 of similar design to that already described and are heated to the drawing temperature. The polymer coating is next drawn through the converging die 6 mounted in the drawing block. Deformation of the polymer continues beyond the drawing block for some distance before it becomes "frozen-out". At this stage both member and coating are travelling with the same velocity, and the coating is in intimate contact with the member. The velocity of the process is controlled and determined by a haul-off "caterpillar" device 7 situated downstream from the final deformation zone.

The ratio of the cross-sectional area of the isotropic polymer tube entering the die block to that of the annular clearance between coated member and die bore is of great importance, as will be understood from the foregoing description of the process. This ratio is controlled and determined by the rate of output of the melt extruder which supplies the crosshead die. This embodiment of the invention can be used to coat several items simultaneously; used where the cross-section is not circular; or used where two or more different polymers are co-extruded.

In Figure 2 a polymer billet 8 is continuously extruded through a die 9 as described in GB—

A—2 048 424. The billet is then advanced to a drawing block 10 and drawn by a haul-off device (not shown) through a converging die 11 mounted in the drawing block. The haul-off velocity and the temperatures of the billet 8 and the drawn product 12 are continuously monitored; their values being input into a computer 13 whence output regulating the melt extrusion rate and quality given by the extruder 14 is provided to the hopper feed 15, the screw drive 16, the barrel heater 17 and the infinitely variable orifice controlled by butterfly valve 18.

In accordance with a further aspect of this invention, there are provided homo- and copolymers of polypropylene which have been deformed in accordance with the process of the invention and having a Young's modulus greater than 18, suitably greater than 20, preferably greater than 23 GPa, especially greater than 25 GPa. This invention. further provides a homo or copolyoxymethylene which has been deformed in accordance with the process of the invention and having a Young's modulus greater than 25 GPa, preferably greater than 27 GPa. This invention further provides a vinylidene fluoride polymer which has been deformed in accordance with the process of the invention and having a Young's modulus greater than 3 GPa, suitably greater than 5 GPa preferably greater than 8 GPa. This invention also provides copolymers of linear polyethylene, particularly copolymers comprising a minor amount of hexene-1, which have been deformed in accordance with the process of the invention and, having a Young's modulus greater than 10 GPa, desirably greater than 30 GPa, preferably greater than 40 GPa. Such copolymer materials cannot be produced at high deformation ratios by conventional drawing or solid state extrusion. This invention further provides a Portland cement or concrete mass incorporating fibres either prepared as such or by fibrillating a film and prepared by the process of this invention, particularly fibres of an ethylene-hexene-1 copolymer.

The advantages of the die drawing process of this invention over hydrostatic extrusion will be manifest to those skilled in the art. Thus, it obviates the necessity of a batch process and dispenses with expensive and potentially hazardous pressure equipment. It is also found that, and in contrast to hydrostatic extrusion, throughput increases with increasing deformation in ratio.

The following Examples illustrate the invention.

Modulus values were determined from a flexural (three-point bend) test at 20°C. This was accomplished by applying a dead load to the test specimen and measuring the deflection after 10 seconds. The ratio of span to specimen thickness was maintained at 80 or higher. The maximum strain at any point in the specimen was less than 0.001.

Example 1

A polypropylene block copolymer having weight average molecular weight of 650,000 (PROPATHENE GSE 108 *ex* I.C.I. PROPATHENE is a Registered Trade Mark) was melted at 250°C in an extruder; extruded into a billet mould at 160°C; and cooled under elevated pressure for 5 hours. The initial, isotropic billet was then machined so that the dimensions shown in Figure 3 in the accompanying drawing are:

$$d_1 = 7mm, \quad d_2 = 10.4mm, \quad d_3 = 15.8mm$$

The machined billet was then advanced into a conical die of 15° semi-angle and at a temperature set at 110°C. The die had a bore diameter of 7mm so that the nominal deformation ratios shown in Figure 3 of the accompanying drawings are:

$$R_{N1} = 1, \quad R_{N2} = 2.2, \quad R_{N3} = 5.1$$

The protruding nose of the billet formed by the first stage was gripped at the exit side of the die and the billet, at an initial temperature of 110°C, was drawn through the die at a speed of 10mm min⁻¹ at a tension of 32.5 kg wt until all of the second stage had been drawn. The grip was then repositioned on part of the billet corresponding to the second stage and drawing recommenced, until sufficient of the third stage had been drawn through the die to enable the grip to be affixed thereto, at a draw speed of 10 mm min⁻¹ at a tension of 92.5 kg wt. Thereafter the grip was finally positioned on the drawn part of the third stage and the remainder thereof was drawn through the die at a draw speed of 500mm min⁻¹ at a tension of 152 kg wt to give an oriented rod of actual deformation ratio 12.7 (average diameter 4.45mm) and a flexural Young's modulus of 15.1 GPa ($\pm$1.4 GPa).

In similar experiments a modulus of 20.6 GPa ($\pm$2.0 GPa) was achieved.

Example 2

Example 1 was repeated using a high density polyethylene homopolymer of $\bar{M}_w$312,000, $\bar{M}_w$33,000 (HO20-54P *ex* BP Chemicals). The machined billet had $d_1 = 5mm$, $d_2 = 8.9mm$ and $d_3 = 12.0mm$ and was drawn through a conical die of 15° semi-angle with its temperature set at 100°C. The die had a bore of 5.3mm so that $R_{N1} = 1$, $R_{N2} = 2.8$ and $R_{N3} = 5.2$. The respective draw speeds and tensions were 10mm min⁻¹ at 22 kg wt; 10mm min⁻¹ at 55 kg wt and 500mm min⁻¹ at 78 kg wt.

The oriented rod had an actual deformation ratio of 10 (average diameter 3.88mm) and a flexural Young's modulus of 14 GPa.

Example 3

Example 1 was repeated using polyoxymethylene of $\bar{M}n$ 45,000 and $\bar{M}w/\bar{M}n$ slightly

greater than 2 (Delrin 500 *ex* Du Pont DELRIN is a Registered Trade Mark). The die had its temperature set at 160°C.

The oriented rod had an actual deformation ratio of 12.6 and a flexural Young's modulus of 20 GPa.

## Example 4

A high density polyethylene homopolymer of $\bar{M}w$ 135,000, $\bar{M}n$ 25,500 and melt flow index of 0.6 dg min$^{-1}$. (006-60 *ex* BP Chemicals) was injection moulded using a mould with a 10mm diameter cylindrical cavity. The barrel temperature was 190°C, and the mould temperature was 110°C. The mould was held under injection pressure for 10 minutes to allow cooling and solidification to take place.

The initial isotropic billet had a diameter of 7mm one end of which was machined to give an essentially conical nose of 5° semi-angle which was extended for 20mm as a rod of diameter 4mm for gripping purposes.

The machined billet was then advanced into a conical die of 15° semi-angle, a bore diameter of 4mm and a temperature set at 100°C.

The protruding nose of the billet was gripped at the exit side of the die and the billet, at an initial temperature of 110°C, was drawn through the die at an initial speed of 5mm min$^{-1}$. After 100mm of material had been drawn through the die, the drawing was stopped and the product was cut off 20mm from the die. The oriented material protruding from the exit side of the die was then regripped and drawing was recommenced at 5mm min$^{-1}$. The load rose to 22 kg and remained constant thereafter. The draw speed was then increased progressively to 66mm min$^{-1}$.

An oriented rod of actual deformation ratio 23.5 and a flexural Young's modulus of 51 GPa was obtained.

## Example 5

A high density polyethylene homopolymer (HO20-54P *ex* BP Chemicals) was compression moulded as follows: a two-part mould was filled with polymer powder, heated to 210°C and left for 20 minutes to attain thermal equilibrium. The mould was then placed between the platens of a press and the powder compressed into a cavity of dimensions 20mm×20mm×200mm. A force of 1200 KN was used. The platens were then water cooled and moulding pressure maintained until the mould temperature had fallen below 80°C.

The initial isotropic billet had a diameter of 12mm one end of which was machined to give an essentially conical nose of 5° semi-angle which was extended for 20mm as a rod of diameter 4mm for gripping purposes.

The machine billet was then advanced into a conical die of 15° semi-angle, a bore diameter of 4mm and a temperature set at 100°C.

The protruding nose of the billet was gripped at the exit side of the die and the billet, at an initial temperature of 100°C, was drawn through the die at an initial speed of 5mm min$^{-1}$. After 100mm of material had been drawn through the die the drawing was stopped and the product cut off 20mm from the die.

The oriented material protruding from the exit side of the die was then regripped and drawing was recommenced. The load rose to 40 kg. The draw speed was then progressively increased to a steady state value of 77 kg.

An oriented rod of actual deformation ratio 11.2 and a flexural Young's modulus of 13 GPa was obtained.

## Example 6

A high density polyethylene homopolymer of $\bar{M}_w$ about 3,500,000 (Hostalen GUR *ex* Hoechst HOSTALEN is a Registered Trade Mark) was used as received as isotropic rod stock of 8mm diameter. One end of this was machined to give an essentially conical nose of 5° semi-angle which was extended for 20mm as a rod of diameter 4mm for gripping purposes.

The machined billet was then advanced into a conical die of 15° semi-angle, a bore diameter of 4mm and a temperature set at 130°.

The protruding nose of the billet was gripped at the exit side of the die and the billet, at an initial temperature of 130°C, was drawn through the die at an initial speed of 5mm min$^{-1}$. After 100mm of material had been drawn through the die the drawing was stopped and the product cut off 20mm from the die. The oriented material protruding from the exit side of the die was then regripped and drawing was recommenced. The load rose to 4 kg. The draw speed was then gradually increased to 200mm min$^{-1}$. The load rose to a steady state value of 20 kg.

An oriented rod of actual deformation ratio 5 and a flexural Young's modulus of 1.76 GPa was obtained.

## Example 7

A high density polyethylene homopolymer (006-60 *ex* BP Chemicals) was injection moulded using a mould with a cylindrical cavity. The barrel temperature was 190°C and the mould temperature was 110°C. The mould was held under injection pressure for 10 minutes to allow solidification to take place.

The initial, isotropic tube billet was machined from the moulding. The tube billet had an internal diameter of 2mm and an external diameter of 8mm. An essentially conical nose of 5° semi-angle which was extended as a tube with an outer diameter of 4mm for gripping purposes was machined on one end of the billet surface.

The machined billet was then advanced into a conical die of 15° semi-angle, a bore diameter of 4mm and a temperature set at 100°C. A fixed mandrel of 2mm diameter was then inserted into the billet.

The protruding nose of the billet was gripped at the exit side of the die and the billet, at an initial temperature of 100°C, was drawn through the die at an initial speed of 5mm min$^{-1}$. After 100mm of material had been drawn through the die the drawing was stopped and the product cut off 20mm from the die. The oriented material protruding from the exit side of the die was then regripped and drawing recommenced. The load rose to 30 kg. The draw speed was then progressively increased to a steady value of 50mm min$^{-1}$. The load increased to a steady state value of 31 kg.

An oriented tube of actual deformation ratio 13 and a flexural Young's modulus of 23 GPa was obtained.

Example 8

A polypropylene copolymer (PROPATHENE GSE 108 ex I.C.I.) was extrusion moulded into a tube billet mould.

The procedure of Example 7 was then essentially repeated with the internal diameter of the tube billet 2mm, the external diameter 7.17mm. The initial temperature of the polymer was 110°C and the steady state draw speed was 40mm min$^{-1}$.

An oriented tube of actual deformation ratio 6.5 and a flexural Young's modulus of 6.3 GPa was obtained.

Example 9

Twenty-four filaments of a high density polyethylene homopolymer of $\bar{M}_w$102,000, $\bar{M}_n$6,200 (Rigidex 50 ex BP Chemicals RIGIDEX is a Registered Trade Mark) were melt spun into a glycerol bath at 118°C. The isotropic filaments had a diameter of 1.36mm. Each filament was necked by contact with a hot stainless steel plate and the necked tow was then inserted into a conical die of 15° semi-angle, a bore diameter of 4mm and a temperature set at 100°C.

The protruding tow was then gripped at the exit side of the die and, at an initial temperature of 100°C, was drawn through the die at a draw speed which was progressively increased to a steady state value of 100mm min$^{-1}$.

An oriented tow of filaments of polygonal cross-section and deformation ratios of from 15 to 20 was obtained. The flexural Young's modulus of individual filaments was from 32 to 40 GPa.

Example 10

A polymer composite containing 75% polypropylene ("Propathene" ex I.C.I.) and 25% chopped glass fibres (by weight) was moulded into rod using a melt extrusion process.

The initial billet machined from the moulded rod had a diameter of 9.8mm, one end of which was machined to give an essentially conical nose of 5° semi-angle which was extended as a rod of 4mm diameter for gripping purposes.

The machine billet was then advanced into a conical die of 15° semi-angle, a bore diameter of 4mm and a temperature set at 110°C.

The protruding nose of the billet was gripped at the exit side of the die and the billet, at an initial temperature of 110°C, was drawn through the die at an initial speed of 5mm min$^{-1}$. After 100mm of material had been drawn through the die, the drawing was stopped and the product cut off 20mm from the die. The oriented material protruding from the exit side of the die was then regripped and drawing was recommenced. The load rose to 69 kg. The draw speed was then increased to a steady state value of 50mm min$^{-1}$. An oriented composite rod of actual deformation ratio 11 and a flexural Young's modulus of 14 GPa was obtained.

Example 11

A polyvinylidene fluoride homopolymer of $\bar{M}_w$351,200, $\bar{M}_n$ 171,000 (Solef XION, ex Solvay SOLEF is a Registered Trade Mark) was injection moulded using a mould with a 10mm diameter cylindrical cavity. The barrel temperature was 220°C and the mould temperature was 20°C. The mould was held under injection pressure for 5 minutes, during which time it was cooled by progessive immersion in a water bath. This procedure ensured that solidification of the polymer took place from the bottom of the mould upwards, preventing the formation of internal voids due to shrinkage.

The initial isotropic billet was machined to a diameter of 9.80mm, one end being further machined to give an essentially conical nose of 5° semi-angle, which was extended for 20mm as a rod of diameter 4mm for gripping purposes.

The machined billet was then advanced into a conical die of 15° semi-angle, a bore diameter of 4mm and at a temperature 140°C.

The protruding nose of the billet was gripped at the exit side of the die and the billet, at an initial temperature of 140°C, and was drawn through the die at a speed of 10mm min$^{-1}$. After 100mm of material had been drawn through the die, the drawing was stopped and the product was cut off 20mm from the die. The oriented material protruding from the exit side of the die was then regripped, and drawing was recommenced at 10mm min$^{-1}$. The load rose to a value of 112 kg and remained constant thereafter.

An oriented rod of actual deformation ratio 6.00 and a flexural Young's modulus of 3.96 GPa was obtained.

In the case of polyvinylidene fluoride molecular weight restrictions are not found to be particularly critical. Desirably, however, the polyvinylidene fluoride has a number average molecular weight from 1.0 to $1.9 \times 10^5$, preferably from 1.3 to $1.8 \times 10^5$, and a weight average molecular weight from $2 \times 10^5$ to $8 \times 10^5$.

Such material may be die-drawn to deformation ratios in excess of 6, for example 6.5 to 8 or even more.

## Example 12

A high density polyethylene homopolymer of $\bar{M}_w$ 67,800, $\bar{M}_n$ 13,350 (140-60 *ex* BP Chemicals) was extrusion moulded into a cylindrical tube, which was then placed vertically in an oven to allow slow cooling solidification of the polymer.

An isotropic billet for die-drawing was machined to a diameter of 8.94 mm one end being a cone of 5° semi-angle which was extended as a rod of 4mm diameter for gripping purposes.

The machined billet was advanced into a conical die of 15° semi-angle and bore diameter of 4mm, set at a temperature of 110°C.

The protruding nose of the billet was gripped at the exit side of the die and the billet, at an initial temperature of 110°C, was drawn through the die at a preliminary draw speed of 5mm min$^{-1}$. After a length of material had been drawn through the die the process was stopped and the product was cut off at a short distance from the die. The oriented material protruding from the exit side of the die was then regripped and drawing continued. The haul-off speed was increased to 30mm min$^{-1}$ whereupon the load rose to a steady value of 15 kg.

An oriented rod of actual deformation ratio 23.4 and a flexural Young's modulus of 45.4 GPa was obtained.

## Example 13

A copolymer of ethylene and hex-1-ene (002-55 *ex* BP Chemicals) was extrusion moulded in the following manner:

A melt extruder was used to fill a cylindrical aluminium mould, which was then placed vertically in an oven at 120°C to allow solidification of the polymer.

The initial, isotropic billet had a diameter of 11.31mm and one end was machined to give a conical nose of 5° semi-angle which was extended as a rod of diameter 4mm for gripping purposes.

The machined billet was then advanced into a conical die of 15° semi-angle, a bore diameter of 4mm and a temperature set at 100°C.

The protruding nose of the billet was gripped at the exit side of the die and then the billet, at an initial temperature of 100°C, was drawn through the die at a preliminary draw speed of 5mm min$^{-1}$. After a length of material had been drawn through the die the process was stopped and the product was cut off at a short distance from the die. The oriented material protruding from the exit side of the die was then regripped and drawing was recommenced. The load rose to 65 kg as the draw speed was gradually increased to a steady state value of 100mm min$^{-1}$.

An oriented rod of actual deformation ratio 11.5 and a flexural Young's modulus of 15.2 GPa was obtained.

## Claims

1. A process for the solid phase deformation and concomitant molecular orientation of a workpiece (8) of an orientable, thermoplastic polymer, which process comprises providing the workpiece at the entry side of a die (11) and applying to the workpiece from the exit side of the die a draw tension insufficient to cause tensile failure of the workpiece and *characterised in that* the workpiece is initially of the essentially unoriented polymer but is drawn through the die so that its plastic strain is progressively increased during start-up of the process.

2. A process according to claim 1 wherein the polymer is a semi-crystalline polymer.

3. A process according to claim 2 wherein the polymer is an unsubstituted or fluoro-substituted vinyl polymer or a polyacetal.

4. A process according to claim 3 wherein the polymer is a linear homo- or copolymer of ethylene or propylene with at least one comonomer.

5. A process according to claim 4 wherein the polymer is a linear homo- or copolymer of ethylene of $\bar{M}_w$ from 50,000 to 500,000.

6. A process according to claim 5 where the die temperature is within 60°C below the melting point of the polymer.

7. A process according to claim 4 wherein the polymer is a linear homo- or copolymer of propylene of $\bar{M}_w$ from 150,000 to 800,000.

8. A process according to claim 7 wherein the die temperature is from 20°C to 170°C.

9. A process according to claim 3 wherein the polymer is a polyoxymethylene.

10. A process according to claim 9 wherein the die temperature is from 80°C to 170°C.

11. A process according to claim 3 wherein the polymer is a vinylidene fluoride polymer.

12. A process according to claim 11 wherein the die temperature is from 80°C to 165°C.

13. A process according to any preceding claim wherein the polymer is filled.

14. A process according to any preceding claim wherein that end of the workpiece to which the draw tension is applied is of progressively reduced cross section.

15. A process according to any preceding claims wherein the aperture of the die is progressively reduced during start-up of the process.

16. A process according to any preceding claim wherein the draw speed is at least 50cm min$^{-1}$.

17. A process according to any preceding claim which is continuous.

18. A process according to claim 17 wherein the upstream end of a discrete workpiece being deformed in accordance with claim 1 is welded to the downstream end of continuous stock of the same polymer and cross-section.

19. A process according to claim 17 or 18 wherein the workpiece is continuously formed in situ.

20. A process according to any preceding claim wherein the workpiece is a filament, film or tube.

21. A process according to any preceding claim wherein the deformation ratio is greater than 10.

22. A homo- or copolymer of propylene whenever prepared by the process of any of claims 1 to 8 or 13 to 21 and having a Young's modulus greater than 18 GPa.

23. A homo- or copolyoxymethylene whenever prepared by the process of any of claims 1 to 3, 9, 10 or 13 to 21 and having a Young's modulus greater than 25 GPa.

24. A vinylidene fluoride polymer whenever prepared by the process of any of claims 1 to 3 or 11 to 21 and having a Young's modulus greater than 3 GPa.

25. A copolymer of linear ethylene whenever prepared by the process of any of claims 1 to 8 or 13 to 21 and having a Young's modulus greater than 10 GPa.

26. A copolymer according to claim 25 and having a Young's modulus greater than 30 GPa.

27. A copolymer according to claim 26 and having a Young's modulus greater than 40 GPa.

28. A copolymer according to any of claims 25 to 27 wherein the comonomer comprises up to 5% of hexene-1.

29. A Portland cement, concrete or thermoset mass into which fibres according to any of claims 22 and 25 to 28 have been introduced.

**Patentansprüche**

1. Verfahren zur Festphasendeformierung und gleichzeitigen molekularen Orientierung eines Werkstückes aus einem orientierbaren thermoplastischen Polymeren, wobei man das Werkstück an der Eingangsseite einer Düse (11) anordnet und auf das Werkstück von der Ausgangsseite der Düse her eine Zugspannung anlegt, die nicht ausreicht, um einen Dehnungsbruch des Werkstückes zu bewirken, dadurch gekennzeichnet, daß das Werkstück anfänglich aus im wesentlichen nicht orientiertem Polymeren besteht, jedoch durch die Düse gezogen wird, so daß seine plastiche Verformung während des Anlaufens des Verfahrens progressiv erhöht wird.

2. Verfahren nach Anspruch 1, dadurch gekennzeichnet, daß das Polymere ein semikristallines Polymeres ist.

3. Verfahren nach Anspruch 2, dadurch gekennzeichnet, daß das Polymere ein unsubstituiertes oder fluor-substituiertes Vinylpolymeres oder ein Polyacetal ist.

4. Verfahren nach Anspruch 3, dadurch gekennzeichnet, daß das Polymere ein lineares Homo- oder Copolymeres von Ethylen oder Propylen Mit wenigstens einem Copolymeren ist.

5. Verfahren nach Anspruch 4, dadurch gekennzeichnet, daß das Polymere ein lineares Homo- oder Copolymeres von Ethylen vom $\bar{M}_w$ 50.000 bis 500.000 ist.

6. Verfahren nach Anspruch 5, dadurch gekennzeichnet, daß die Düsentemperatur innerhalb von 60°C unter dem Schmelzpunkt des Polymeren liegt.

7. Verfahren nach Anspruch 4, dadurch gekennzeichnet, daß das Polymere ein lineares Homo- oder Copolymeres von Propylen vom $\bar{M}_w$ 150.000 bis 800.000 ist.

8. Verfahren nach Anspruch 7, dadurch gekennzeichnet, daß die Düsentemperatur zwischen 20°C und 170°C liegt.

9. Verfahren nach Anspruch 3, dadurch gekennzeichnet, daß das Polymere ein Polyoxymethylen ist.

10. Verfahren nach Anspruch 9, dadurch gekennzeichnet, daß die Düsentemperatur zwischen 80°C und 170°C liegt.

11. Verfahren nach Anspruch 3, dadurch gekennzeichnet, daß das Polymere ein Vinylidenfluoridpolymeres ist.

12. Verfahren nach Anspruch 11, dadurch gekennzeichnet, daß die Düsentemperatur zwischen 80°C und 165°C liegt.

13. Verfahren nach einem der vorhergehenden Ansprüche, dadurch gekennzeichnet, daß das Polymere gefüllt ist.

14. Verfahren nach einem der vorhergehenden Ansprüche, dadurch gekennzeichnet, daß das Ende des Werkstückes, an welches die Zugspannung angelegt wird, einen progressiv verminderten Querschnitt hat.

15. Verfahren nach einem der vohergehenden Ansprüche, dadurch gekennzeichnet, daß die Öffnung der Düse progressiv während des Anlaufens des Verfahrens verkleinert wird.

16. Verfahren nach einem der vorhergehenden Ansprüche, dadurch gekennzeichnet, daß die Ziehgeschwindigkeit wenigstens 50 cm · min⁻¹ beträgt.

17. Verfahren nach einem der vorhergehenden Ansprüche, dadurch gekennzeichnet, daß es kontinuierlich durchgeführt wird.

18. Verfahren nach Anspruch 17, dadurch gekennzeichnet, daß das stromaufwärtige Ende eines gesonderten, gemäß Anspruch 1 zu deformierenden Werkstücks, mit dem stromabwärtigen Ende des kontinuierlichen Vorrats aus gleichem Polymeren und gleichem Querschnitt verschweißt wird.

19. Verfahren nach Anspruch 17 oder 18, dadurch gekennzeichnet, daß das Werkstück kontinuierlich in situ geformt wird.

20. Verfahren nach einem der vorhergehenden Ansprüche, dadurch gekennzeichnet, daß das Werkstück ein Faden, Film oder Rohr ist.

21. Verfahren nach einem der vorhergehenden Ansprüche, dadurch gekennzeichnet, daß das Deformationsverhältnis gröber als 10 ist.

22. Homo- oder Copolymeres aus Propylen, hergestellt nach dem Verfahren gemäß einem der Ansprüche 1 bis 8 oder 13 bis 21, das einen Young Modul von mehr als 18 GPa aufweist.

23. Homo- oder Copolyoxymethylen, hergestellt nach dem Verfahren gemäß einem der Ansprüche 1 bis 3, 9, 10 oder 13 bis 21, das einen Young Modul von mehr als 25 GPa hat.

24. Vinylidenfluoridpolymeres, hergestellt nach dem Verfahren gemäß einem der Ansprüche 1 bis 3 oder 11 bis 21, das einen Young Modul von mehr als 3 GPa hat.

25. Copolymeres von linearem Ethylen, hergestellt gemäß dem Verfahren einer der Ansprüche 1 bis 8 oder 13 bis 21, das einen Young Modul von mehr als 10 GPa hat.

26. Copolymeres nach Anspruch 25, das einen Young Modul von mehr als 30 GPa hat.

27. Copolymeres gemäß Anspruch 26, das einen Young Modul von mehr als 40 GPa hat.

28. Copolymeres gemäß einem der Ansprüche 25 bis 27, dadurch gekennzeichnet, daß das Comonomere bis zu 5% Hexen-1 aufweist.

29. Portland-Zement, Beton oder hitzegehärtete Masse, in welche Fasern gemäß einem der Ansprüche 22 und 25 bis 28 eingebracht sind.

## Revendications

1. Procédé de déformation en phase solide et d'orientation moléculaire simultanée d'une pièce (8) en un polymère thermoplastique orientable, ce procédé comprenant la fourniture de la pièce du côté entrée d'une filière (11) et l'application à la pièce, à partir de côté sortie de la filière, d'une tension de traction d'étirage ne suffisant pas à provoquer une rupture de la pièce par traction, procédé caractérisé en ce que la pièce est initialement en le polymère essentiellement non orienté mais est tirée à travers la filière de manière que sa déformation plastique augmente progressivement au cours du démarrage du procédé.

2. Procédé selon la revendication 1, dans lequel le polymère es un polymère semi-cristallin.

3. Procédé selon la revendication 2, dans lequel le polymère est un polymère vinylique non substitué ou fluorosubstitué ou est un polyacétal.

4. Procédé selon la revendication 3, dans lequel le polymère est un homo- ou copolymère linéaire de l'éthylène ou du propylène avec au moins un comonomère.

5. Procédé selon la revendication 4, dans lequel le polymère est un homo- ou copolymère linéaire de l'éthylène ayant un $\bar{M}_p$ compris entre 50 000 et 500 000.

6. Procédé selon la revendication 5, dans lequel la température de la filière se situe à moins de 60°C au-dessous du point de fusion du polymère.

7. Procédé selon la revendication 4, dans lequel le polymère est un homo- ou copolymère linéaire du propylène ayant un $\bar{M}_p$ comprise entre 150 000 et 800 000.

8. Procédé selon la revendication 7, dans lequel la température de la filiére se situe entre 20°C et 170°C.

9. Procédé selon la revendication 3, dans lequel le polymère est un polyoxyméthylène.

10. Procédé selon la revendication 9, dans lequel la température de filière se situe entre 80°C et 170°C.

11. Procédé selon la revendication 3, dans lequel le polymére est un polymère de fluorure de vinylidène.

12. Procédé selon la revendication 11, dans lequel la température de filière se situe entre 80°C et 165°C.

13. Procédé selon l'une quelconque des revendications précédentes, dans lequel le polymère comporte une charge.

14. Procédé selon l'une quelconque des revendications précédentes, dans lequel l'extrémité de la pièce à laquelle on applique une tension mécanique de traction présente une section droite dont la valeur diminue progressivement.

15. Procédé selon l'une quelconque des revendications précédentes, dans lequel l'ouverture de la filière est progressivement réduite pendant le démarrage du procédé.

16. Procédé selon l'une quelconque des revendications précédentes, dans lequel la vitesse de traction est au moins égale à 50 cm·min⁻¹.

17. Procédé selon l'une quelconque des revendications précédentes, qui est continu.

18. Procédé selon la revendication 17, dans lequel l'extrémité amont d'une pièce séparée, en cours de déformation selon la revendication 1, est soudée à l'extrémité aval du stock continu du même polymère ayant la même section.

19. Procédé selon la revendication 17 ou 18, dans lequel la pièce est continuellement formée sur place.

20. Procédé selon l'une quelconque des revendications précédentes, dans lequel la pièce est un filament, un film ou un tube.

21. Procédé selon l'une quelconque des revendications précédentes, dans lequel le rapport de déformation est supérieur à 10.

22. Homo- ou copolymère de propylène, larsqu'il a été préparé par le procédé selon l'une quelconque des revendications 1 à 8 ou 13 à 21 et qu'il possède un module de Young supérieur à 10 GPa.

23. Homo- ou copolyoxyméthylène lorsqu'il a été préparé par un procédé selon l'une quelconque des revendications 1 à 3, 9, 10 ou 13 à 21 et qu'il possède un module de Young supérieur à 25 GPa.

24. Polymère de fluorure de vinylidène, parce qu'il a été préparé par un procédé selon l'une quelconque des revendications 1 à 3 ou 11 à 21 et qu'il possède un module d'Young supérieur à 3 GPa.

25. Copolymère d'éthylène linéaire, lorsqu'il a été préparé par le procédé selon l'une quelconque des revendications 1 à 8 ou 13 à 21 et qu'il possède un module de Young supérieur à 10 GPa.

26. Copolymère selon la revendication 25, que possède un module de Young supérieur à 30 GPa.

27. Copolymère selon la revendication 26, que possède un module de Young supérieur à 40 GPa.

28. Copolymère selon l'une quelconque des revendications 25 à 27, dans lequel le comonomère comprend jusqu'à 5% d-hexène-1.

29. Ciment Portland, béton ou composition thermo-durcie, dans lequel des fibres selon l'une quelconque des revendications 22 et 25 à 28 ont été introduites.

Fig. 1

Fig. 2

Fig. 3

$$R_{Ni} = \left(\frac{d_i}{d_0}\right)^2$$